## Europäisches Patentamt

## European Patent Office

## Office européen des brevets

(19)

(11) Veröffentlichungsnummer: **0 230 553**
**B1**

(12)

# EUROPÄISCHE PATENTSCHRIFT

(45) Veröffentlichungstag der Patentschrift:
**18.01.89**

(51) Int. Cl.⁴: **F 16 L 3/22**, B 60 R 11/00

(21) Anmeldenummer: **86116370.7**

(22) Anmeldetag: **25.11.86**

(54) **Haltevorrichtung für mindestens eine Leitung, insbesondere eine Kraftstoffleitung an einem Kraftfahrzeug.**

(30) Priorität: **29.01.86 DE 3602625**

(43) Veröffentlichungstag der Anmeldung:
**05.08.87 Patentblatt 87/32**

(45) Bekanntmachung des Hinweises auf die Patenterteilung:
**18.01.89 Patentblatt 89/3**

(84) Benannte Vertragsstaaten:
**ES FR GB IT SE**

(56) Entgegenhaltungen:
**DE-A- 3 047 462**
**DE-A- 3 236 981**
**DE-A- 3 416 020**
**DE-U- 8 234 247**
**FR-A- 2 551 174**

(73) Patentinhaber: **BAYERISCHE MOTOREN WERKE AG,**
**Postfach 40 02 40 Petuelring 130 - AJ-31,**
**D-8000 München 40 (DE)**

(72) Erfinder: **Strohmayer, Manfred, Wasserburgerstrasse 15,**
**D-8013 Haar (DE)**
Erfinder: **Henkel-Adam, Franz-Josef, Stiftsbogen 148,**
**D-8000 München 70 (DE)**
Erfinder: **Stöcker, Wilfried, Hildeboldstrasse 3,**
**D-8000 München 40 (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

## Beschreibung

Die Erfindung betrifft eine Haltevorrichtung für mindestens eine Leitung, insbesondere eine Kraftstoffleitung, an einem Wandabschnitt eines Kraftfahrzeugs, mit den im Oberbegriff des Hauptanspruchs angegebenen Merkmalen.

Eine derartige Haltevorrichtung ist aus der DE-A-3 416 020 bekannt, die zur Abstützung einer Bremsleitung an einem Wandabschnitt vorgesehen ist. Die Haltevorrichtung weist einen U-förmigen, im Stegbereich mit dem Wandabschnitt verbundenen Haltebügel auf. Zwischen die Schenkel des Haltebügels ist ein elastischer, U-förmiger Dämpfungskörper einschiebbar, der zwischen seinen Schenkeln die Bremsleitung aufnimmt. Zur Befestigung des Dämpfungskörpers weisen die Schenkel des Haltebügels jeweils vom freien Randbereich schräg nach innen gerichtete Stützarme auf, die beim Einschieben des Dämpfungskörpers einschwenken. Ist der Dämpfungskörper vollständig in den Haltebügel eingeschoben, werden die Schenkel des weichelastischen Dämpfungskörpers von den elastisch gespannten Schenkeln des Haltebügels nach innen gebogen, so dass die Bremsleitung im Dämpfungskörper und der Dämpfungskörper im Haltebügel eingeschlossen sind. Ein wesentlicher Nachteil dieser Vorrichtung ist, dass der Haltebügel ein zur Bremsleitung im Abstützbereich wesentlich grösseres Bauvolumen aufweist. Durch die hartelastischen Schenkel des Haltebügels ist der Dämpfungskörper verhältnismässig schwer in den Haltebügel einschiebbar. Ein oftmaliges Auswechseln der Bremsleitung ohne Erneuerung der Haltevorrichtung ist nicht möglich, da sich im Schwenkbereich der hartelastischen Stützarme leicht Risse bilden. Zumindest in diesem Fall können die Stützarme die Schenkel des Dämpfungskörpers nicht selbsttätig nach innen biegen, so dass hierzu beispielsweise ein Werkzeug erforderlich ist. Durch Erschütterungen können die durch Risse geschwächten Stützarme einschwenken, wodurch die Bremsleitung nicht ausreichend festgehalten ist. Das Auswechseln der Bremsleitung ist erschwert, da hierzu die beiden Stützarme wegzuschwenken und festzuhalten sind, damit der Dämpfungskörper dem Haltebügel entnommen werden kann. Mit dieser Haltevorrichtung lassen sich mehrere Leitungen nur mit grossen Abständen nebeneinander anordnen.

Der Erfindung liegt die Aufgabe zugrunde, eine Haltevorrichtung für mindestens eine Leitung entsprechend dem Oberbegriff des Hauptanspruchs anzugeben, die ein geringes Bauvolumen aufweist und auf einfache Weise eine geräuschisolierende Befestigung wenigstens einer Leitung auch nachträglich ermöglicht. Darüber hinaus soll die Leitung beliebig oft leicht auszutauschen und bei jeder Montagefolge von der Haltevorrichtung zuverlässig festgehalten sein.

Diese Aufgabe ist durch die im Kennzeichen des Hauptanspruchs angegebenen Merkmale gelöst. Dadurch, dass das Gehäuse eine seitliche Einführöffnung aufweist, durch die das Dämpfungselement in das Gehäuse einschiebbar ist, kann das Dämpfungselement nicht aus dem Gehäuse verlagert werden, wenn eine Leitung in die Aufnahmeöffnung des Dämpfungselements eingebracht ist. Zur elastischen Abstützung der Leitung an einem Wandelement ist lediglich das Dämpfungselement in das am Wandabschnitt befestigte Gehäuse seitlich einzuschieben und die Leitung durch den Längsschlitz im Gehäuse und durch den Einführschlitz im Dämpfungselement in die im Dämpfungselement ausgebildete Aufnahmeöffnung einzubringen. Dies erfolgt ohne besondere Kraftanstrengung, da sich der Längsschlitz und der Einführschlitz elastisch aufweiten lassen. Umgekehrt lässt sich die Leitung bei einer entsprechenden Kraftanstrengung durch den Einführschlitz und den Längsschlitz hindurch der Haltevorrichtung entnehmen. Da sich das Dämpfungselement bei der Entnahme der Leitung an den Rändern des Längsschlitzes am Gehäuse abstützt, wird an dieser Stützfläche eine Haft- bzw. Reibkraft erzeugt, die einem Aufweiten des Einführschlitzes im Dämpfungselement entgegenwirkt. Es ist deshalb zur Entnahme der Leitung eine grössere Kraftanstrengung erforderlich als zum Einführen der Leitung in das Dämpfungselement. Durch entsprechende Ausbildung des Längsschlitzes und des Einführschlitzes lässt sich erreichen, dass die Leitung leicht in die Haltevorrichtung einzubringen und in dieser ausreichend festgehalten ist.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen

Fig. 1 eine zur elastischen Abstützung von drei Leitungen vorgesehene Haltevorrichtung in Explosionsdarstellung, und

Fig. 2 einen Querschnitt der am Wandabschnitt angeordneten Haltevorrichtung nach Fig. 1 vor der Montage der Sicherungsplatte.

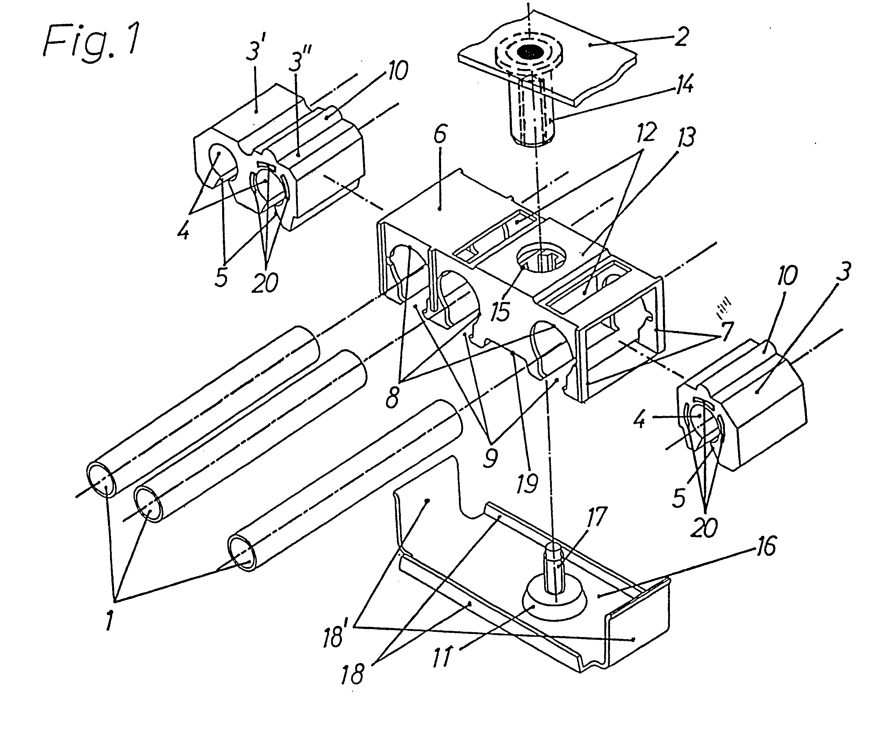

In der Fig. 1 ist eine Haltevorrichtung zur elastischen Abstützung von drei parallel nebeneinander angeordneten Leitungen 1 an einem Wandabschnitt 2 in Explosionsdarstellung abgebildet. Die Haltevorrichtung weist für jede Leitung 1 ein Dämpfungselement 3, 3', 3'' auf, wobei zwei Dämpfungselemente 3, 3'' miteinander verbunden sind. Die Anzahl der Leitungen 1, und damit die Anzahl der Dämpfungselemente 3, 3', 3'', könnte auch abweichend von dem Ausführungsbeispiel gewählt sein. Die Dämpfungselemente 3, 3', 3'' können dabei beliebig gruppenweise oder insgesamt verbunden sein. In jedem Dämpfungselement 3, 3', 3'' ist eine dem Querschnitt der zugeordneten Leitung 1 angepasste, zylindrische Aufnahmeöffnung 4 ausgebildet, die mit einem elastisch aufweitbaren Einführschlitz 5 versehen ist, durch den die betreffende Leitung 1 in die Aufnahmeöffnung 4 eingebracht werden kann. Um das Einführen der Leitung 1 in das Dämpfungselement 3, 3', 3'' zu erleichtern, ist der Einführschlitz 5 des jeweiligen Dämpfungselements 3, 3', 3'' mit Einführschrägen versehen. Zur Befestigung der Dämpfungselemente 3, 3', 3'' an dem Wandabschnitt 2 ist ein Gehäuse 6 vorgesehen. Dieses weist auf beiden gegenüberliegenden Seiten Einführöffnungen 7, 7' auf, durch die die Dämpfungselemente 3 in das Gehäuse 6 einschiebbar und nach der Montage von diesem gestützt sind. Um eine seitliche Verlagerung des Dämpfungselements 3 und der beiden miteinander verbundenen Dämpfungselemente 3', 3'' nach dem Einschieben in das Gehäuse 6 zu verhindern, ist jeweils auf der dem Wandabschnitt 2 zugewandten Aussenseite des Dämpfungselements 3 und 3'' eine etwa parallel zu den Leitungen 1 verlaufende, im Querschnitt etwa halbkreisförmige Rastnase 10 ausgebildet, die über die gesamte Länge des jeweiligen Dämpfungselements 3, 3'' verläuft und die nach der Montage in Schlitze 12 im Gehäuse 6 eingreifen. Die Ausbildung der Rastnase 10 und die Form der Schlitze 12 können jedoch auch von dem Ausführungsbeispiel abweichend gewählt sein. Jedes Dämpfungselement 3, 3', 3'' wird somit in allen Richtungen von dem Gehäuse 6 ohne zusätzliche Befestigungselemente gestützt, wobei die Abstützung auch an den Rändern der Längsschlitze 9 erfolgt. Am Umfang der Durchtrittsöffnungen 8 können wie bei den Dämpfungselementen 3 und 3'' ausgeführt durchgehende Schlitzbogen 20 vorgesehen sein, durch die eine gewünschte Formweichheit der Dämpfungselemente 3, 3', 3'' erreicht wird. Die Anzahl und Form der Schlitzbogen 20 kann auch von dem Ausführungsbeispiel abweichen. In dem Gehäuse 6 ist ausserdem für jede Leitung 1 eine zur jeweiligen Leitung 1 grössere Durchtrittsöffnung 8 ausgebildet, die nach dem Einschieben des zugeordneten Dämpfungselements 3, 3', 3'' zur Aufnahmeöffnung 4 dieses Dämpfungselements 3, 3', 3'' etwa koaxial verläuft. Jede Durchtrittsöffnung 8 ist auf der dem Wandabschnitt 2 abgewandten Seite mit je einem Längsschlitz 9 zum Einführen der Leitungen 1 in die Dämpfungselemente 3, 3', 3'' versehen, der jeweils mit dem zugeordneten Einführschlitz 5 fluchtet. Jeder Längsschlitz 9 ist in der Breite kleiner als der Aussendurchmesser der zugeordneten Leitung 1 ausgebildet und lässt sich beim Einführen der Leitung 1 in die Durchtrittsöffnung 8 elastisch aufweiten. Auf diese vorteilhafte Weise ist ein selbsttätiges Herausfallen der Leitung 1 nach dem Einbringen in die Durchtrittsöffnung 8 nicht ohne weiteres möglich. Die Längsschlitze 9 am Gehäuse 6 sind mit Einführschrägen versehen, die das Einbringen der Leitungen 1 in die Durchtrittsöffnungen 8 erleichtern. Das Gehäuse 6 weist auf der dem Wandabschnitt 2 zugewandten Seite etwa in Seitenmitte einen vorstehenden Sockel 13 auf, über den das Gehäuse 6 an dem Wandabschnitt 2 anliegt. Das Gehäuse 6 ist auf eine von dem Wandabschnitt 2 abstehende Gewindebuchse 14 aufsteckbar, der in eine etwas kleinere, durchgehende Öffnung 15 im Sockel 13 des Gehäuses 6 einpressbar ist und durch Klemmwirkung das Gehäuse 6 festhält. Zur stabilen Befestigung des Gehäuses 6 an dem Wandabschnitt 2 und zur Sicherung der Leitungen 1 vor einem Herausfallen aus dem Gehäuse 6 bei grösseren Beanspruchungen ist eine Sicherungsplatte 16 vorgesehen, die die Längsschlitze 9 abdeckt und durch eine von aussen in das Innengewinde der Gewindebuchse 14 einschraubbare Gewindeschraube 17 an dem Wandabschnitt 2 befestigt wird. Die Sicherungsplatte 16 weist an allen Seiten zum Wandabschnitt 2 abgewinkelte Ränder 18, 18' auf, wobei die seitlichen Ränder 18' nach der Montage die seitlichen Einführöffnungen 7, 7' grösstenteils abdecken. Dadurch wird ein seitliches Herausfallen eines der Dämpfungselemente 3, 3', 3'' aus dem Gehäuse 6 auch dann verhindert, wenn dieses Dämpfungselement 3, 3', 3'' zwar in dem Gehäuse 6 angeordnet, jedoch nicht zur Lagerung von Leitungen 1 benötigt wird. Um die Beanspruchung des Schraubenkopfes der Gewindeschraube 17 durch Steinschlag und Korrosion wenigstens zu vermindern, ist in der Sicherungsplatte 16 ein kegelstumpfförmiger Napf 11 ausgebildet, der an der Innenseite in eine seiner Querschnittskontur angepasste Längsnut 19 hineinragt und in seiner äusseren Vertiefung den Schraubenkopf der Befestigungsschraube 17 vollkommen aufnimmt.

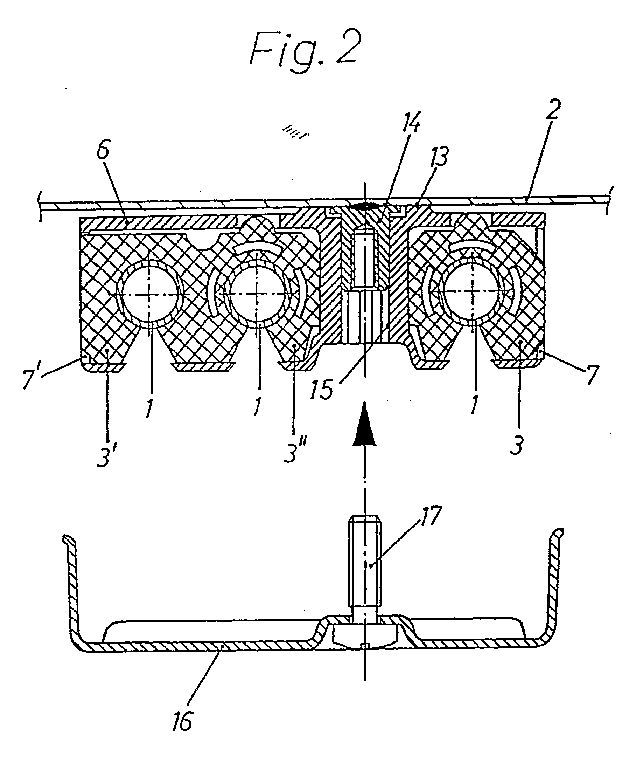

Ein Querschnitt der am Wandabschnitt 2 angeordneten Haltevorrichtung ist vor der Montage der Sicherungsplatte 16 in Fig. 2 dargestellt. Das Gehäuse 6 mit den zur elastischen Abstützung vorgesehenen Leitungen 1 ist auch ohne Sicherungsplatte 16 von der Gewindebuchse 14 durch Klemmwirkung gehalten. Ein einzelnes Herausnehmen oder Einbringen von Leitungen 1 ist dadurch erheblich erleichtert. Die Leitungen 1 können sowohl in dem Gehäuse 6 vormontiert oder nach dem Aufstecken des Gehäuses 6 auf die Gewindebuchse 14 montiert werden. Die anschliessende Befestigung der Sicherungsplatte 16 durch Einschrauben der Befestigungsschraube 17 in das Innengewinde der Gewindebuchse 14 erfolgt frei von der Last der Leitungen 1. Werden nur einige der Dämpfungselemente 3, 3', 3'' zur elastischen Lagerung von Leitungen 1 benötigt, so können die nicht von Leitungen 1 durchsetzten Dämpfungselemente dem Gehäuse entnommen und beispielsweise für weitere derartige Haltevorrichtungen verwendet werden, wodurch sich eine Kosten- und Gewichtsersparnis ergibt. Die Haltevorrichtung kann auch ohne Sicherungsplatte 16 verwendet werden. Ist in diesem Fall die Klemmwirkung zwischen der Öffnung 15 im Gehäuse 6 und der Gewindebuchse 14 nicht ausreichend, um das Gehäuse 6 in seiner Lage sicher zu halten, so kann das Gehäuse 6 an dem Wandabschnitt 2 beispielsweise dadurch zusätzlich befestigt werden, dass von aussen eine Schraube in das Innengewinde der Gewindebuchse 14 eingeschraubt wird, die das Gehäuse 6 gegen den Wandabschnitt 2 belastet. Anstelle einer Gewindebuchse 14 könnte auch ein Gewindebolzen verwendet werden, auf den beispielsweise eine Hohlschraube aufschraubbar oder dann aufschlagbar ist, wenn die Hohlschraube elastisch nachgiebig ausgebildet ist und sich entsprechend aufweiten lässt. Durch die geringe Berührungsfläche des Gehäuses 6 mit dem Wandabschnitt 2 lediglich im Bereich des Sockels 13 wird eine günstigere Geräuschdämpfung erreicht, da sich das Gehäuse 6 auf diese Weise energieverzehrend elastisch verformen kann.

## Patentansprüche

1. Haltevorrichtung für mindestens eine Leitung, insbesondere eine Kraftstoffleitung, an einem Wandabschnitt eines Kraftfahrzeugs, an dem ein Gehäuse befestigt ist, in das durch eine Einführöffnung ein elastisches Dämpfungselement einschiebbar ist, das eine mit einem Einführschlitz versehene Aufnahmeöffnung für die Leitung aufweist, wobei in dem Gehäuse eine zum Aussendurchmesser der Leitung grössere Durchtrittsöffnung ausgebildet ist, die etwa koaxial zur Leitung verläuft und von aussen über einen elastisch aufweitbaren Längsschlitz in der dem Wandabschnitt abgewandten Gehäuseseite zugänglich ist, der eine zur Leitung kleinere Öffnungsbreite aufweist und mit dem Einführschlitz im Dämpfungselement fluchtet, das sich an den Rändern des Längsschlitzes an dem Gehäuse abstützt, dadurch gekennzeichnet, dass die Einführöffnung seitlich an dem Gehäuse ausgebildet ist.

2. Haltevorrichtung nach Anspruch 1, dadurch gekennzeichnet, dass an dem Dämpfungselement (3, 3', 3'') eine Rastnase (10) ausgebildet ist, die nach dem Einschieben des Dämpfungselements (3, 3', 3'') in das Gehäuse (6) in eine darin gebildete Ausnehmung eingreift.

3. Haltevorrichtung nach Anspruch 1 und 2, dadurch gekennzeichnet, dass die Rastnase (10) an der dem Einführschlitz (5) abgewandten Seite des Dämpfungselements (3) im Querschnitt etwa halbkreisförmig ausgebildet ist, in Längsrichtung der Leitung (1) über die gesamte Länge des Dämpfungselements (3, 3', 3'') verläuft und mit einer als Schlitz (12) ausgebildeten Ausnehmung am Gehäuse (6) zusammenwirkt.

4. Haltevorrichtung nach Anspruch 1, dadurch gekennzeichnet, dass der Einführschlitz (5) am Dämpfungselement (3, 3', 3'') und/oder der Längsschlitz (9) am Gehäuse (6) mit Einführschrägen versehen sind.

5. Haltevorrichtung nach Anspruch 1, dadurch gekennzeichnet, dass der Längsschlitz (9) von einer mit dem Wandabschnitt (2) oder dem Gehäuse (6) verbindbaren Sicherungsplatte (16) abgedeckt ist.

6. Haltevorrichtung nach Anspruch 1, dadurch gekennzeichnet, dass das Gehäuse (6) mehrere nebeneinander angeordnete Leitungen (1) in je einem Dämpfungselement (3, 3', 3'') elastisch abstützt.

7. Haltevorrichtung nach Anspruch 6, dadurch gekennzeichnet, dass die Dämpfungselemente (3, 3', 3'') gruppenweise oder insgesamt einstückig ausgebildet sind.

8. Haltevorrichtung nach Anspruch 1 und 5, dadurch gekennzeichnet, dass die Sicherungsplatte (16) einen zum Wandabschnitt (2) kegelstumpfförmig eingedrückten Napf (11) aufweist, der in eine seiner Kontur im Querschnitt angepasste Längsnut (19) im Gehäuse (6) hineinragt.

9. Haltevorrichtung nach Anspruch 1, dadurch gekennzeichnet, dass die Sicherungsplatte (16) abgewinkelte Ränder (18, 18') aufweist, die das Gehäuse (6) umgeben, wobei ein seitlicher Rand (18') die Einführöffnung (7, 7') wenigstens teilweise abdeckt.

10. Haltevorrichtung nach Anspruch 1, dadurch gekennzeichnet, dass das Gehäuse (6) auf der dem Wandabschnitt (2) zugewandten Seite wenigstens einen vorstehenden Sockel (13) aufweist, über den das Gehäuse (6) an dem Wandabschnitt (2) anliegt.

11. Haltevorrichtung nach Anspruch 1, dadurch gekennzeichnet, dass das Gehäuse (6) durch Klemmwirkung von einem von dem Wandabschnitt (2) in eine Öffnung (15) im Gehäuse (6) abstehenden Gewindebolzen oder -buchse (14) gehalten ist.

12. Haltevorrichtung nach Anspruch 8 und 11, dadurch gekennzeichnet, dass zur Befestigung des Gehäuses (6) und der Sicherungsplatte (16) an dem Wandabschnitt (2) eine Hohlschraube oder Gewindeschraube (17) durch eine Bohrung im Napf (11) der Sicherungsplatte (16) und der Öffnung (15) im Gehäuse (6) auf den Gewindebolzen oder -buchse (14) aufschraubbar ist.

## Claims

1. Holding means for holding at least one pipe, especially a fuel pipe, on a portion of a motor-vehicle wall to which a casing is fastened, into which casing a resilient shock-absorption element can be inserted through an opening, the element being formed with an opening and an insertion slot for the pipe, the casing being formed with a through-opening larger than the outer diameter of the pipe and extending substantially coaxially therewith and accessible from the exterior through a resiliently-widenable longitudinal slot in the side of the casing remote from the wall portion, the slot having a smaller opening width towards the pipe and being flush with the insertion slot in the shock-absorption element, which bears on the edges of the longitudinal slot in the casing, characterised in that the insertion opening is formed at the side of the casing.

2. Means according to claim 1, characterised in that a projection (10) is formed on the shock-absorption element (3, 3', 3'') and engages in a recess in the casing after insertion of the shock-absorption element (3, 3', 3'') into the casing (6).

3. Means according to claims 1 and 2, characterised in that the projection (10) has a substantially semi-circular cross-section on the side of the shock-absorption element (3) remote from the insertion slot (5), extends over the entire length of the shock-absorption element (3, 3', 3''), in the longitudinal direction of the pipe (1), and cooperates with a recess in the form of a slot (12) in the casing (6).

4. Means according to claim 1, characterised in that the insertion slot (5) in the shock-absorption element (3, 3', 3'') and/or the longitudinal slot (9) in the casing (6) are formed with insertion slopes.

5. Means according to claim 1, characterised in that the longitudinal slot (9) is covered by a safety plate (16) for connecting to the wall portion (2) or the casing (6).

6. Means according to claim 1, characterised in that the casing (6) resiliently holds a number of adjacent pipes (1) in respective shock-absorption elements (3, 3', 3'').

7. Means according to claim 6, characterised in that the shock-absorption elements (3, 3', 3'') are formed in groups or together in one piece.

8. Means according to claims 1 and 5, characterised in that the safety plate (16) has a frusto-conical boss (11) pressed in towards the wall portion (2) and projecting into a longitudinal groove (19) having a corresponding cross-section in the casing (6).

9. Means according to claim 1, characterised in that the safety plate (16) has bent edges (18, 18') which surround the casing (6), and one side edge (18') at least partly covers the insertion opening (7, 7').

10. Means according to claim 1, characterised in that the casing (6), on the side facing the wall portion (2), has at least one projecting base (13) on which the casing (6) rests on the wall portion (2).

11. Means according to claim 1, characterised in that the casing (6) is held by clamping a threaded bolt or sleeve (14) projecting from the wall portion (2) into an opening (15) in the casing (6).

12. Means according to claims 8 and 11, characterised in that, in order to secure the casing (6) and the safety plate (16) to the wall portion (2), a hollow screw or threaded screw (17) is screwable on to the threaded bolt or sleeve (14) through a bore in the boss (11) of the safety plate (16) and the opening (15) in the casing (6).

## Revendications

1. Dispositif de retenue pour au moins une conduite, en particulier une conduite de carburant, sur un élément de paroi d'un véhicule automobile, sur lequel est fixé un corps, dans lequel peut être glissé, par une ouverture d'introduction, un élément amortisseur élastique, qui présente une ouverture de logement de la conduite pourvue d'une fente d'introduction, une ouverture de passage plus grande que le diamètre extérieur de la conduite étant réalisée dans le corps, cette ouverture étant approximativement coaxiale à la conduite et accessible de l'extérieur à travers une fente longitudinale pouvant s'élargir élastiquement, sur la face du corps opposée à l'élément de paroi, cette fente ayant une largeur d'ouverture inférieure à la conduite et étant alignée avec la fente d'introduction de l'élément amortisseur qui s'appuie sur le corps aux bords de la fente longitudinale, caractérisé en ce que l'ouverture d'introduction est réalisée sur le côté du corps.

2. Dispositif de retenue suivant la revendication 1, caractérisé en ce que, sur l'élément amortisseur (3, 3', 3''), est réalisé un cran d'arrêt (10) qui pénètre, après introduction de l'élément amortisseur (3, 3', 3''), dans le corps (6) dans un creux réalisé dans ce dernier.

3. Dispositif de retenue suivant les revendications 1 et 2, caractérisé en ce que le cran d'arrêt (10) sur la face de l'élément amortisseur (3) opposée à la fente d'introduction (5) est réalisé avec une section transversale à peu près semi-circulaire, s'allonge dans le sens de la longueur de la conduite (1) sur toute la longueur de l'élément amortisseur (3, 3', 3'') et agit avec un creux réalisé dans le corps (6) sous la forme d'une fente (12).

4. Dispositif de retenue suivant la revendication 1, caractérisé en ce que la fente d'introduction (5) de l'élément amortisseur (3, 3', 3'') et/ou la fente longitudinale (9) du corps (6) sont pourvues de chanfreins d'introduction.

5. Dispositif de retenue suivant la revendication 1, caractérisé en ce que la fente longitudinale (9) est recouverte par une plaque de sécurité (16) qui peut être reliée à l'élément de paroi (2) ou au corps (6).

6. Dispositif de retenue suivant la revendication 1, caractérisé en ce que le corps (6) supporte élastiquement plusieurs conduites (1) disposées côte à côte dans un élément amortisseur (3, 3', 3'').

7. Dispositif de retenue suivant la revendication 6, caractérisé en ce que les éléments amortisseurs (3, 3', 3'') sont réalisés groupés ou globalement d'une seule pièce.

8. Dispositif de retenue suivant l'une quelconque des revendications 1 à 5, caractérisé en ce que la plaque de sécurité (16) présente une cuvette (11) tronconique emboutie vers l'élément de paroi (2), qui pénètre dans une rainure longitudinale (19) du corps (6) adaptée à la section du contour de la cuvette.

9. Dispositif de retenue suivant la revendication 1, caractérisé en ce que la plaque de sécurité (16) présente des bords (18, 18') recourbés qui entourent le corps (6), un bord latéral (18') recouvrant au moins partiellement l'ouverture d'introduction (7, 7').

10. Dispositif de retenue suivant la revendication 1, caractérisé en ce que le corps (6) présente, sur sa face tournée vers l'élément de paroi (2), au moins un socle proéminent (13) par lequel le corps (6) est en contact avec l'élément de paroi (2).

11. Dispositif de retenue suivant la revendication 1, caractérisé en ce que le corps (6) est maintenu par effet de serrage par un boulon fileté ou une bague filetée (14) faisant saillie depuis l'élément de paroi (2) dans un trou (15) du corps (6).

12. Dispositif de retenue suivant l'une quelconque des revendications 8 et 11, caractérisé en ce que, pour la fixation du corps (6) et de la plaque de sécurité (16) sur l'élément de paroi (2), on peut visser sur le boulon fileté ou la bague filetée (14) une vis creuse à filet femelle ou une vis (17) à travers un trou dans la cuvette (11) de la plaque de sécurité (16) et le trou (15) du corps (6).

Fig. 1

EP 0 230 553 B1

# Fig. 2